# EUROPÄISCHE PATENTANMELDUNG

(11) **EP 0 942 316 A2**
(43) Veröffentlichungstag der Anmeldung: **15.09.1999**
(21) Anmeldenummer: 99104231.8
(22) Anmeldetag: 03.03.1999
(51) Int. Cl.: G02F 1/15

(54) **Verfahren zur Herstellung einer Ionenspeicherschicht für elektrochrome Anordnungen**

(30) Priorität: 13.03.1998 DE 19810931
(71) Anmelder: BAYER AG, 51368 Leverkusen (DE)
(72) Erfinder: Heuer, Helmut-Werner, Dr., 47829 Krefeld (DE); Wehrmann, Rolf, Dr., 47800 Krefeld (DE); Jonas, Friedrich, Dr., 52066 Aachen (DE)

(57) **Zusammenfassung**

Verfahren zur Herstellung einer Ionenspeicherschicht aus Vanadiumoxid oder Nioboxid oder einem Lithiumionen-enthaltenden Vanadiumoxid oder Nioboxid für eine elektrochrome Schichtanordnung, in dem auf einem Substrat die Ionenspeicherschicht aus einer wäßrigen Lösung heraus durch einen Sol-Gel-Prozess in einem Temperaturbereich von 40 bis 150°C erzeugt wird.

## Beschreibung

Die vorliegende Erfindung betrifft ein Verfahren zur Herstellung einer anorganischen Ionenspeicherschicht für elektrochrome Anordnungen mit steuerbarer Lichtdurchlässigkeit.

Scheiben von Fahrzeugen können bisher nicht in ihrer Transparenz für elektromagnetische Strahlung geregelt werden. Phototrope Gläser finden bisher nur als Brillengläser Verwendung und weisen nur eine relativ geringe Änderung der Transmission auf. Scheiben an Gebäuden werden bisher mit Vorhängen, Fensterläden, Rolläden oder anderen beweglichen mechanischen Elementen verdunkelt.

Elektrochrome Vorrichtungen können also auf vielfältige Weise Anwendung finden. So seien zusammenfassend als Beispiele genannt:
1. Fahrzeugverglasung (Fensterscheiben oder Autosonnendächer)
   Eine elektrochrome Vorrichtung eignet sich als Sonnen- oder Blendschutz in Kraftfahrzeugen. Front-, Seiten- und Heckverglasung oder Glasdächer können einbezogen werden. Der Grad der Abdunkelung kann zonenweise und stufenlos an die Bedürfnisse des Fahrers an den Sonnenstand und an die aktuelle Fahrsituation angepaßt werden. Die Integration in ein rechnergesteuertes Kontrollsystem ist möglich. Eine Kombination von aktivem Element mit einer Verbundglaseinheit ist ebenso möglich, wie das Aufbringen eines Foliensystems auf die Sicherheitsscheiben.
   Die Durchlässigkeit der Scheiben kann von Hand oder automatisch gesteuert werden, was zu einem wirksamen Blendschutz bei Nachtfahrten, automatischer Anpassung des Helligkeitspegels bei Ein- und Ausfahrten von Tunneln und Parkhäusern und zum Schutz gegen Einbruch und Diebstahl des geparkten Fahrzeugs durch Verhinderung des Einblicks ins Wageninnere genutzt werden kann. Eine übermäßige Erwärmung des Innenraums im Sommer, insbesondere bei geparktem Fahrzeug, kann verhindert werden. (vgl. z.B. EP-A-0 272 428)
2. Gebäudeverglasung (elektrochromes Fenster)
   In Gebäuden eignen sich elektrochrome Anordnungen zur Abdunkelung von Seitenfenstern und Dachfenstern von Gebäuden, Wohnräumen, Arbeitsräumen oder Gewächshäusern als steuerbarer Sonnenschutz (sichtbarer Spektralbereich) und Wärmeschutz (IR-Bereich) sowie als Sichtschutz (sichtbarer Spektralbereich). Zum Schutz vor Einbrüchen können Verglasungen von Bankschaltern oder Schaufenster auf Knopfdruck verdunkelt werden. Glastüren können bei Annäherung von Personen automatisch sichtbar gemacht werden, um Verletzungen zu vermeiden. Durch die Möglichkeit, nahezu alle Farbtöne zu erzeugen, ist auch eine gestalterische Einbeziehung der Verglasung in die Fassade eines Gebäudes möglich. Der Energieverbrauch für die großflächige Steuerung der Fenstertransparenz ist gering, insbesondere wenn der Memory-Effekt des Systems ausgenutzt werden kann und nur in der Umschaltphase Energie verbraucht wird. Eine Kombination mit einer Wärmeschutzverglasung (K-Glas) ist sehr gut geeignet um eine dynamische Kontrolle der Sonneneinstrahlung durch ein Fenster hindurch zu gewährleisten ( 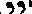 smart window"). Somit kann ein elektrochromes System zur Regulierung und Begrenzung der notwendigen Energie zur Gebäudeklimatisierung beitragen.
   Die Spannungsversorgung des Systems kann auch durch Solarmodule erfolgen. Ein lichtempfindlicher Sensor kann den Grad der Sonneneinstrahlung ermitteln und somit den Grad der Lichtdurchläßigkeit steuern.
3. Anzeigeelemente
   Durch die farblich attraktive Gestaltungsmöglichkeit sowie die großflächige Darstellung beliebiger Konturen, z.B. Buchstaben, Zahlen, Zeichen und Symbole (durch geeignete Strukturierungstechniken herstellbar) ist ein für die Werbung interessantes Medium verfügbar. Dekorative und informative Effekte sind leicht möglich.
   Neben der Möglichkeit, das System zwischen Glasscheiben anzuordnen besteht auch die Alternative zwei oder auch nur eine transparente Kunststofffolie als Träger zu verwenden. Dadurch werden plakatähnliche Werbemittel mit veränderbarer Information realisierbar.
   Elektrochrome Vorrichtungen können für kleine Anzeigeelemente wie Zifferblätter von Uhren oder Meßinstrumenten, Displays für die unterschiedlichsten Anwendungen und für große Anzeigeelemente wie Verkehrsschilder, Litfaßsäulen, Anzeigen auf Bahnhöfen, Flugplätzen oder bei Parkleitsystemen verwendet werden. Der Einsatz als variables Linienbegrenzungssystems (Spielfeldbegrenzungen etc.) in Sporthallen ist ebenfalls möglich.
   Die Verwendung ist generell dort möglich, wo Informationen sichtbar gemacht werden sollen.
4. Optik
   In der Optik ist die Verwendung elektrochromer Systeme sowohl in Kombination mit Gläsern, Linsen und Filter anderen optischer Geräte als auch als alleinige aktiv genutzte Komponente möglich. Die Anwendung als Überblendschutz für optische Detektionssysteme ist ebenfalls möglich. Als steuerbares Filtersystem bei fotographischen Prozessen ist das System ebenfalls geeignet.
5. Spiegel
   Eine elektrochrome Vorrichtung kann auch als abblendbarer Spiegel, z.B. im Automobil als Außen- oder Rückspiegel eingesetzt werden, der durch Anlegen einer elektrischen Spannung abgedunkelt werden kann und somit das Blenden durch Scheinwerfer fremder Fahrzeuge verhindert wird (vgl. z.B. US-A 3 280 702, US-A 4 902 108, EP-A 0 435 689, US-A 5 140 455). Nachteilig bei Systemen nach dem Stand der Technik (Lösungssysteme) ist die Farbinhomogenität nach längerem Betrieb (Segregation), insbesondere bei Spiegeln großer Abmessungen (z.B. LKW-Spiegel). Eine Erhöhung der Viskosität des Lösungssystems durch Zugabe von polymeren Verdickern wird beschrieben (z.B. US-A 4 902 108).
6. EMI shielding
   Eine elektrochrome Vorrichtung kann auch als variables Filterelement zur Modulation elektromagnetischer Strahlung in bestimmten Wellenlängenbereichen eingesetzt werden.

Elektrochrome Vorrichtungen bestehen normalerweise aus einem Paar Glasscheiben, von denen im Falle eines Spiegels eine verspiegelt ist. Eine Seite dieser Scheiben ist mit einer lichtdurchlässigen, elektrisch leitfähigen Schicht, z.B. Indium-Zinn-Oxid (ITO), beschichtet. Aus diesen Scheiben wird eine Zelle aufgebaut, indem sie mit ihrer einander zugewandten elektrisch leitfähig beschichteten Seite fixiert werden, wobei die Zelle zwischen den Scheiben das elektrochrome System enthält, das in bestimmten Fällen eine Ionenspeicherschicht beinhaltet. Sie ist dicht verschlossen. Über die leitfähige Schicht lassen sich die beiden Scheiben getrennt elektrisch kontaktieren und ansteuern.

Bei den aus dem oben zitierten Stand der Technik bekannten elektrochromen Lösungs-Systemen sind solche Paare von Redoxsubstanzen in einem Lösungsmittel enthalten, die nach Reduktion bzw. Oxidation farbige Radikale, Kationradikale oder Anionradikale bilden, die chemisch reaktiv sind. Beispiele hierfür sind die seit langem bekannten Viologensysteme.

Als Paar von Redoxsubstanzen wird hierbei je eine reduzierbare und eine oxidierbare Substanz verwendet. Beide sind farblos oder nur schwach gefärbt. Unter Einfluß einer elektrischen Spannung wird die eine Substanz reduziert, die andere oxidiert, wobei wenigstens eine farbig wird. Nach Abschalten der Spannung bilden sich die beiden ursprünglichen Redoxsubstanzen wieder zurück, wobei Entfärbung bzw. Farbaufhellung auftritt.

Aus US-A 4 902 108 ist bekannt, daß solche Paare von Redoxsubstanzen geeignet sind, bei denen die reduzierbare Substanz wenigstens zwei chemisch reversible Reduktionswellen im cyclischen Voltammogramm und die oxidierbare Substanz entsprechend wenigstens zwei chemisch reversible Oxidationswellen besitzt. Systeme dier Art kommen hauptsächlich für abblendbare Autorückspiegel in Frage. Da es sich hierbei uni Lösungssysteme handelt kommt eine Anwendung in elektrochromen Fenstern unter normalen Umständen nicht in Betracht.

Es sind auch Systeme bekannt, bei denen das eigentliche elektrochrome Redoxpaar in einer Polymermatrix dispergiert ist (s. z.B. WO-A 96/3475).

Kombinationen anorganischer elektrochromer Komponenten, wie z. B. WO₃ , NiO oder IrO₂ sind ebenfalls bekannt und kommen als Komponenten in einem elektrochromen Fenster in Betracht (s. z.B. US-A 5 657 149, Electronique International No. 276, 16 (1997); Fa. Saint-Gobain).

Diese anorganischen elektrochromen Komponenten lassen sich nur durch Aufdampfen, Aufsputtern oder durch Sol-Gel-Technik auf dem leitfähigen Substrat aufbringen. Dies führt dazu, daß Systeme dieser Art sehr teuer in der Herstellung werden. In dem Bestreben, eine anorganische Komponente durch eine organische Polymerkomponente zu ersetzen, sind z.B. elektrochrome Systeme auf Basis des elektrisch leitfähigen Polymers Polyanilin (PANI) und WO₃ als komplementäre elektrochrome Materialien bekannt geworden (s. z.B. B.P. Jelle, G. Hagen, J. Electrochem. Soc., Vol. 140, No. 12, 3560 (1993)). Es wurde auch der Versuch unternommen, Systeme ohne eine anorganische Komponente einzusetzen, wobei die ITD oder SnO₂-Schicht (Gegenelektrode) als komplementäre elektrochrome Komponente zu substituierten Poly(3,4-ethylendioxythiophenen) dienen soll (US-A 5 187 608).

Es zeigt sich jedoch, daß derartige elektrochrome Anordnungen ungeeignet sind, uni eine ausreichende Anzahl Schaltcyclen ohne Veränderung der Device-Eigenschaften zu gewährleisten, da wahrscheinlich die ITO oder SnO₂-Schicht nach einigen Schaltcyclen degradiert, bzw. die Interkalation der zugesetzten Li-Ionen nicht reversibel ist Für die Reversibilität und damit letztendlich für die Cyclenstabilität benötigt man eine Ionenspeicherschicht, die bisher nur durch Aufdampfen, Aufsputtern oder durch Sol-Gel-Technik bei drastischen Temperbedingungen erzeugt werden kann. Letztere Herstellungsbedingung schließt die Verwendung von Kunststoffsubstraten aus.

Aufgabe der vorliegenden Erfindung ist es, ein Herstellungsverfahren für eine geeignete anorganische Ionenspeicherschicht zu entwickeln, welche die obengenannten Nachteile der bisher bekannten Herstellungsverfahren nicht aufweist. Insbesondere soll das Herstellungsverfahren so schonend sein, daß auch Kunststoffsubstrate in elektrochromen Anordnungen verwendet werden können.

Es wurde nun gefunden, daß sich eine anorganische Ionenspeicherschicht aus Vanadiumoxid, oder Nioboxid bzw. Lithiumionen-enthaltendes Vanadiumoxid, oder Nioboxid durch ein sehr schonendes Sol-Gel-Verfahren erzeugen läßt.

Gegenstand der vorliegenden Erfindung ist ein Verfahren zur Herstellung einer Ionenspeicherschicht aus Vanadiumoxid oder Nioboxid oder einem Lithiumionenenthaltenden Vanadiumoxid oder Nioboxid für eine elektrochrome Schichtanordnung, indem auf einem Substrat die Ionenspeicherschicht aus einer wäßrigen Lösung heraus durch einen Sol-Gel-Prozess in einem Temperaturbereich von 40 bis 150°C erzeugt wird.

Bevorzugt werden Schichten aus anorganischen Ionenspeichern auf Vanadiumoxid- oder Nioboxid-Basis der Formeln (I) bis (VI):

V₂O₅ (I),

LiₓV₂O₅ (II),

LiₓV₂O_{5+x/2} (III),

Nb₂O₅ (IV),

LiₓNb₂O₅ (V),

LiₓNb₂O_{5+x/2} (VI),

wobei
- x: für Zahlen von 0,001 bis 5, vorzugsweise von 0,001 bis 3 steht.

Die Ionenspeicherschichten lassen sich durch ein sehr schonendes Sol-Gel-Verfahren erzeugen.

Man geht folgendermaßen vor:
Eine wäßrige Ammonium-metavanadat-Lösung (NH₄VO₃) bzw. Ammonium-metaniobat (NH₂NbO₃) wird mit einem Kationenaustauscher zum Ersatz des Ammoniumkations gegen Protonen behandelt, beispielsweise durch Rühren. Nach Abfiltrieren des Kationenaustauschers wird die resultierende Lösung stehengelassen (Alterung). Die Zeit, die die Lösung ruhen muß, hängt dabei von der Umgebungs- bzw. Lösungs-Temperatur ab. Bei Raumtemperatur beispielsweise sollte die Lösung wenigstens 3 Stunden stehengelassen werden. Bei höheren Temperaturen reichen auch deutlich kürzere Zeiten, beispielsweise bereits 30 Minuten.

Anschließend wird die Lösung beispielsweise durch Gießen, Sprühen oder ähnliches auf die elektrisch leitfähige Seite der Unterlage (Substrat) aufgebracht und diese wird anschließend bei Temperaturen von 40 bis 150°C, vorzugsweise 40 bis 130°C, getempert.

Man erhält so eine Schicht aus dem Ionenspeicher, die eine ausgezeichnete Reversibilität in bezug auf die Lithium-Ionen Interkalation und Dekalation aufweist.

Die Verbindungen der Formeln (I) bis (VI) sind allgemein bekannte Verbindungen, käuflich erhältlich oder nach allgemein bekannten Methoden der anorganischen Chemie herstellbar (vgl. z.B. Römpp Chemie Lexikon; Chem. Abstr. 1313-96-8; Hollemann-Wiberg, Lehrbuch der Anorganischen chemie, 71. - 80. Auflage, Walter de Gruyter & Co., Berlin 1971, (z.B. Seiten 779-781)).

Zur besseren Benetzung der Substrate mit der wäßrigen Lösung kann auch ein Benetzungsmittel (z.B. Fluortensid) zugesetzt werden.

Die gealterte Lösung kann entweder mit einem Li-Salz versetzt werden oder ohne dieses Salz auf das Substrat aufgebracht und dann getempert werden, wobei dies unter Vakuum oder bei Normaldruck geschehen kann.

Als bevorzugte Li-Salze kommen LiClO₄, LiCF₃SO₃, LiN(SO₂CF₃)₂, LiCl, LiPF₆ in Frage. Ganz besonders bevorzugt sind hierbei LiClO₄, LiCF₃SO₃ und LiN(SO₂CF₃)₂.

Die Verbindungen sind allgemein bekannt bzw. käuflich erhältlich oder nach allgemein bekannten Methoden der anorganischen Chemie herstellbar.

Das erfindungsgemäße Herstellungsverfahren für Ionenspeicherschichten in elektrochromen Anordnungen kann auf Glas oder verschiedene Sorten Kunststoff als Substrat angewendet werden.

Bevorzugt sind transparente Substrate jeglicher Art, die mit einer elektrisch leitenden, transparenten Beschichtung oder mit einer spiegelnden Schicht versehen sind.

Als besonders bevorzugte Materialien neben Glas, speziell Wärmeschutzglas bei Anwendung als elektrochromes Fenster (in Schichtdicken von 10 µm bei 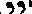 flexiblem Glas, Dünnglas" bis 3 cm) kommen Polyester (z.B. Polyethylenterephthalat (PET)), verschiedene Typen von Polycarbonat (z.B. ®Makrolon, APEC-HT) sowie Polycycloolefine in Frage. Das polymere Substrat kann dabei als flexible Folie oder als dicke Platte zum Einsatz kommen. Das Substrat kann auch gekrümmt vorliegen. Die Kunststoffsubstrate können zusätzlich noch mit Sperrschichten gegen Wasser und Sauerstoff versehen sein.

Das erfindungsgemäße Herstellungsverfahren der Ionenspeicherschichten ist ein Herstellungsschritt in der Gesamtherstellung einer elektrochromen Anordnung. In einer elektrochromen Anordnung dient das erfindungsgemäße Herstellungsverfahren als Teilschritt bei der Erzeugung eines elektrochromen Schichtaufbaus als Medium mit variabler Transmission, d.h. unter Einfluß einer elektrischen Spannung ändert sich die Lichtdurchlässigkeit des Systems, indem sie von einem farblosen in einen gefärbten Zustand übergeht.

Gegenstand der vorliegenden Erfindung ist weiterhin die Einbeziehung des erfindungsgemäßen Herstellungsverfahrens in die Herstellung einer elektrochromen Vorrichtung. Anwendungen dieser elektrochromen Vorrichtung bestehen z.B. als Fensterscheibe, Autosonnendach, Automobil-Rückspiegel, Display oder als optisches Element.

### Beispiele:

### Beispiel 1

### Herstellung einer Ionenspeicherschicht 1 (V₂O₅)

a) Herstellung einer Sol-Lösung zur Erzeugung der Ionenspeicherschicht
   2,5 g Ammoniumvanadat NH₄(VO₃) werden in 25 g Wasser gelöst und 37,5 g des Ionenaustauschers Lewatit S100 (Fa. Bayer AG, Leverkusen, Deutschland) hinzugegeben. Anschließend wird 10 Minuten bei Raumtemperatur gerührt. Unter schnellem Rühren gibt man anschließend nochmal 475 g Wasser hinzu und rührt 10 Minuten nach. Die Mischung wird abfiltriert und die erhaltene Lösung 24 Stunden bei Raumtemperatur zur Alterung stehengelassen. Schließlich wird 0,25 g des Benetzungsmittels Fluortensid FT 248 (Fa. Bayer AG Leverkusen, Deutschland) hinzugegeben. Diese Lösung ist gebrauchsfertig.
b) Gelprozeß
   Die Lösung aus Beispiel 1a) wird auf die leitfähige Seite von ITO-Glas aufgebracht und mit der Lackschleuder eine gleichmäßige Schicht des Sols erzeugt (10 sec. bei 1000 U/min). Anschließend tempert man 24 Stunden bei 60°C. Schichtdickenmessung mit dem Profilometer ergab 10 bis 20 nm.

### Beispiel 2

### Herstellen einer Ionenspeicherschicht 2 (LiₓV₂O₅)

1 g der Lösung aus Beispiel 1a) wird mit 0,01 g LiCF₃SO₃ (Li-Triflat der Fa. Aldrich) versetzt und gut verrührt. Man bringt diese Lösung wie unter Beispiel 1b) beschrieben auf die leitfähige Seite von K-Glas (FTO) auf und erzeugt bei 100°C im Verlauf von 2 Stunden Temperzeit eine Ionenspeicherschicht, die jedoch im Unterschied zu Beispiel 1b) bereits Li-Ionen enthält.

### Beispiel 3

### Herstellung einer Ionenspeicherschicht 3 (V₂O₅)

Die Lösung aus Beispiel 1a) wird auf die leitfähige Seite von K-Glas aufgebracht und mit der Lackschleuder eine gleichmäßige Schicht des Sols erzeugt (10 sec. bei 1000 U/min). Anschließend tempert man 2 Stunden bei 100°C. Schichtdickenmessung mit dem Profilometer ergab 10 - 20 nm.

### Beispiel 4

### Bau von elektrochromen Zellen zum Test der Ionenspeicherschichten:

- Aufbringen eines elektrochromen Polymers auf ein ITO-Substrat:
   Baytron®P (wäßrige Dispersion des leitfähigen Polymers PEDT/PSS, Polyethylendioxythiophen-Polystyrolsulfonat der Fa. Bayer AG) wird aus wäßriger Lösung heraus mit einer Lackschleuder 4 mal mit je 15 Sekunden bei einer Umdrehungsgeschwindigkeit von 1500 U/min auf die elektrisch leitfähige Seite einer ITO-Glasscheibe (Fa. Merk-Balzers, Liechtenstein, Oberflächenwiderstand <15 Ω/sq) aufgebracht. Während dem Aufbringen wird mittels eines Föns das Lösungsmittel abgedampft.
   Man erhält einen durchsichtigen, nur ganz leicht bläulich gefärbten Polymerfilm. Eine Messung der Schichtdicke mit einem Profilometer ergab einen Wert von 0,6 µm.
- Aufbringen von Baytron P auf K-Glas:
   Baytron®P wird aus wäßriger Lösung heraus mit einer Lackschleuder 4 mal mit je 15 Sekunden bei einer Umdrehungsgeschwindigkeit von 1500 U/min auf die elektrisch leitfähige Seite einer K-Glas-Scheibe (FTO, Wärmeschutzscheibe der Fa. Flachglas, Oberflächenwiderstand ∼20 Ω/sq) aufgebracht. Während des Aufbringens wird mittels eines Föns das Lösungsmittel abgedampft.
   Man erhält einen durchsichtigen, nur ganz leicht bläulich gefärbten Polymerfilm. Eine Messung der Schichtdicke ergab einen Wert von 0,6 µm.
- Herstellung eines Gel-Elektrolyten 1:
   Man erzeugt folgende Mischung:
   7,0 g Acetonitril
   2,0 g Propylencarbonat (trocken)
   0,7g PMMA (M_{w} ca. 15.000)
   0,3 g CF₃SO₃Li (Fa. Aldrich)
   Nachdem alles gelöst ist, wird die Lösung einmal filtriert und ist gebrauchsfertig.
- Herstellung eines Gel-Elektrolyten 2:
   Vorgehensweise analog, jedoch mit folgenden Einwaagen:
   7,0 g Acetonitril
   2,0 g Propylencarbonat
   0,7 g Polyethylenoxid (PEO; M_{w} ca. 200.000)
   0,3 g CF₃SO₃Li (Fa. Aldrich)
- Herstellung einer Gel-Elektrolytschicht 1:
   Der Gel-Elektrolyt 1 wird mit der Lackschleuder auf die Ionenspeicherschicht 1 aufgebracht (30 sec. bei 1000 U/min). Dabei dampft das leichtflüchtige Acetonitril fast vollständig ab, wodurch der Gel-Elektrolyt als Schicht zurückbleibt.
- Herstellung einer Gel-Elektrolytschicht 2:
   Der Gel-Elektrolyt 2 wird mit der Lackschleuder auf die Ionenspeicherschicht 1 aufgebracht (30 sec. bei 1000 U/min). Dabei dampft das leichtflüchtige Acetonitril fast vollständig ab, wodurch der Gel-Elektrolyt als Schicht zurückbleibt.
- Herstellung einer Gel-Elektrolytschicht 3:
   Der Gel-Elektrolyt 2 wird mit der Lackschleuder auf die Ionenspeicherschicht 2 aufgebracht (30 sec. bei 1000 U/min). Dabei dampft das leichtflüchtige Acetonitril fast vollständig ab, wodurch der Gel-Elektrolyt als Schicht zurückbleibt.
- Herstellung einer Gel-Elektrolytschicht 4:
   Der Gel-Elektrolyt 2 wird mit der Lackschleuder auf die Ionenspeicherschicht 3 aufgebracht (30 sec. bei 1000 U/min). Dabei dampft das leichtflüchtige Acetonitril fast vollständig ab, wodurch der Gel-Elektrolyt als Schicht zurückbleibt.
- Fertigstellung einer kompletten elektrochromen Zelle 1 und 2:
   Auf die Ionenspeicherschicht 1 auf ITO-Gläser werden Gel-Elektrolyten 1 und 2 gleichmäßig aufgebracht und mit den mit Baytron P-beschichteten Seiten von ITO-Glas-Substraten in Kontakt gebracht. Man erhält elektrochrome Schichtanordnungen, die in Beispiel 5 charakterisiert werden.
- Fertigstellung einer kompletten elektrochromen Zelle 3 und 4:
   Auf die Ionenspeicherschicht 2 und 3 auf K-Gläser werden Gel-Elektrolyten 2 gleichmäßig aufgebracht und mit den mit Baytron P-beschichteten Seiten von K-Glas-Substraten in Kontakt gebracht. Man erhält elektrochrome Schichtanordnungen, die in den Beispielen 6 und 7 charakterisiert werden.

### Beispiel 5

### Zyklenstabilitäts-Test an den elektrochromen Zellen 1 und 2

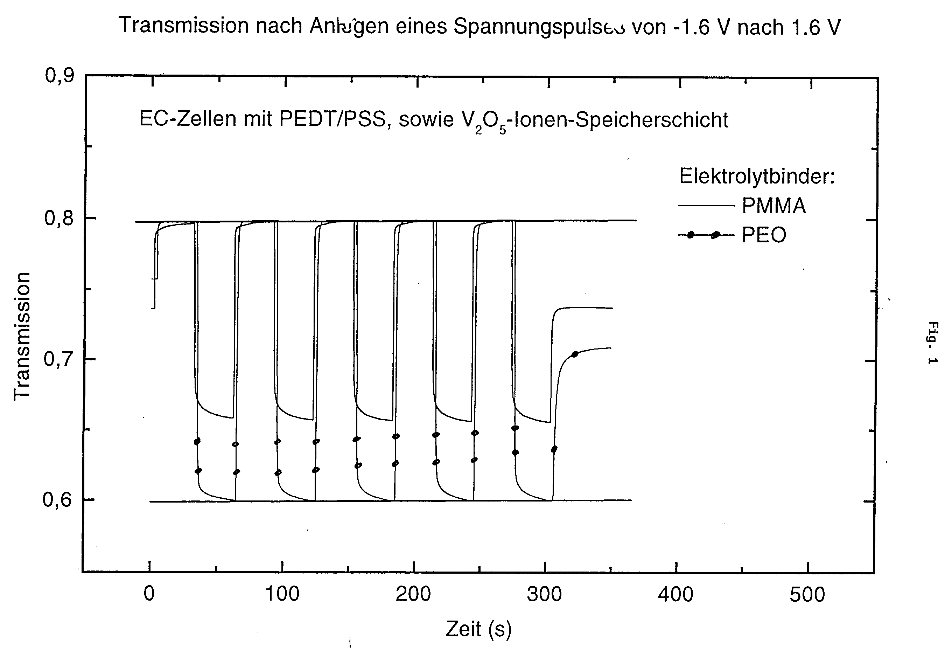

Die elektrochromen Zellen 1 (mit PMMA) und 2 (mit PEO) aus Beispiel 4 werden jeweils an den leitfähigen Schichten der beschichteten ITO-Gläser mit 1,6 V Gleichspannung kurze Zeit kontaktiert, bevor man dann die Polarität der elektrischen Ansteuerung ändert. Man erreicht dadurch ein zyklenmäßiges Ein- und Entfärben der Zelle. Dabei beobachtet man gleichzeitig die zeitliche Änderung der Transmission der Zelle. Man stellt fest, daß Anordnungen mit den erfindungsgemäß hergestellten Ionenspeicherschichten stabiles Schaltverhalten zeigen (vergleiche hierzu Fig. 1).

### Beispiel 6

### Zyklenstabilitäts-Test an der elektrochromen Zelle 3

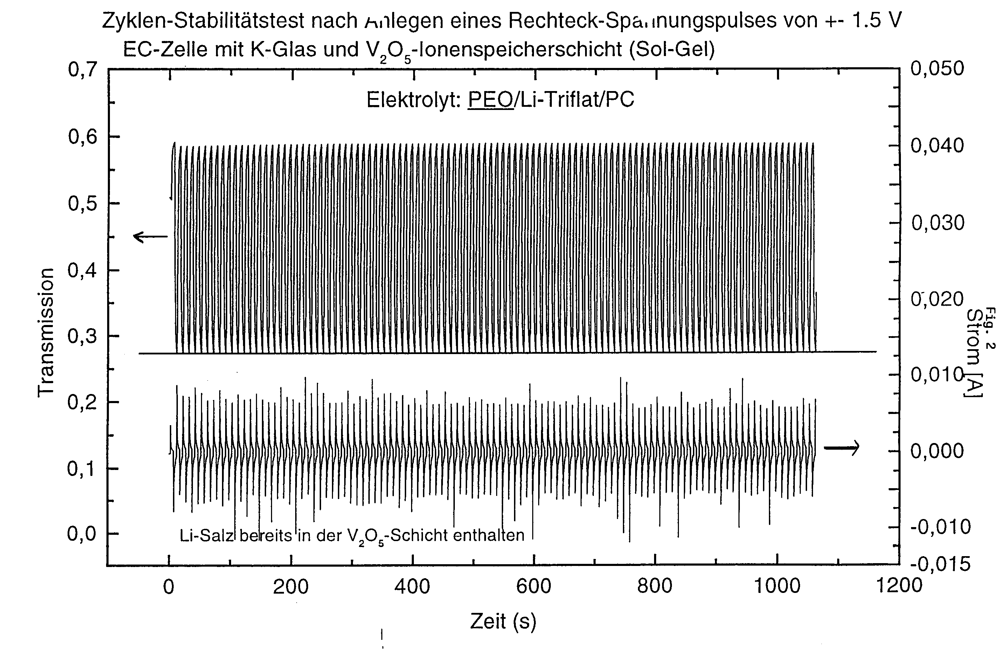

Die elektrochromen Zelle 3 (mit PEO auf LiₓV₂O₅) aus Beispiel 4 wird jeweils an den leitfähigen Schichten der beschichteten K-Gläser mit 1,5 V Gleichspannung kurze Zeit kontaktiert, bevor man dann die Polarität der elektrischen Ansteuerung ändert. Man erreicht dadurch ein zyklenmäßiges Ein- und Entfärben der Zelle. Dabei beobachtet man gleichzeitig die zeitliche Änderung der Transmission der Zelle sowie den Strom durch die Anordnung. Man stellt fest, daß die Anordnungen mit der erfindungsgemäß hergestellten Ionenspeicherschicht stabiles Schaltverhalten zeigen (vergleiche hierzu Fig. 2).

### Beispiel 7

### Cyclovoltametrische Untersuchung der elektrochromen Zellen 3 und 4

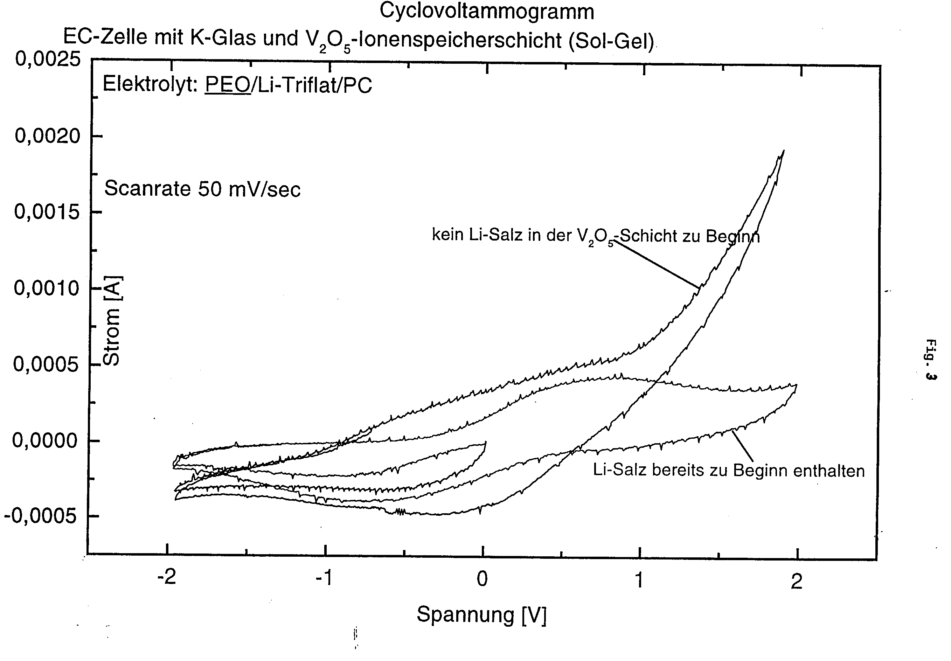

Die elektrochromen Zellen 3 (mit PEO auf LiₓV₂O₅) und 4 (mit PEO auf V₂O₅) aus Beispiel 4 werden durch Cyclovoltametrie in einem Zweielektrodenaufbau ohne Referenz zwischen +2 V und -2 V (umgepolt) in bezug auf ihre Strom-Spannungskennlinien charakterisiert. Wie in Fig. 3 zu ersehen ist, läßt sich das elektrochemische Eigenschaftsprofil und damit das Schaltverhalten der Anordnung durch die Wahl der Herstellungsbedingungen der Ionenspeicherschichten variieren.

## Patentansprüche

1. Verfahren zur Herstellung einer Ionenspeicherschicht aus Vanadiumoxid oder Nioboxid oder einem Lithiumionen-enthaltenden Vanadiumoxid oder Nioboxid für eine elektrochrome Schichtanordnung, in dem auf einem Substrat die Ionenspeicherschicht aus einer wäßrigen Lösung heraus durch einen Sol-Gel-Prozess in einem Temperaturbereich von 40 bis 150°C erzeugt wird.

2. Verfähren gemäß Anspruch 1, dadurch gekennzeichnet daß als anorganischer Ionenspeicher Verbindungen aus der Gruppe der Formeln (I) bis (VI) eingesetzt werden:
V₂O₅ (I),
LiₓV₂O₅ (II),
LiₓV₂O_{5+x/2} (III),
Nb₂O₅ (IV),
LiₓNb₂O₅ (V),
LiₓNb₂O_{5+x/2} (VI),
wobei
x für Zahlen von 0,001 bis 5 steht.

3. Verfahren gemäß Anspruch 1, dadurch gekennzeichnet, daß eine wäßrige Ammonium-metavanadat- bzw. -niobat-Lösung mit einem Kationenaustauscher zum Ersatz der Ammoniumkationen durch Protonen behandelt wird, nach Abfiltrieren des Kationenaustauschers die resultierende Lösung stehengelassen und dann auf das Substrat aufgebracht wird und das Substrat dann bei Temperaturen von 40 bis 150°C getempert wird.

4. Verfahren gemäß Anspruch 1, dadurch gekennzeichnet, daß zur Benetzung der Substrate mit der wäßrigen Lösung ein Benetzungsmittel zugesetzt wird.

5. Verfahren gemäß Anspruch 1, dadurch gekennzeichnet, daß die gealterte Lösung gegebenenfalls mit einem Li-Salz versetzt wird, auf das Substrat aufgebracht wird und dann getempert wird.

6. Verfahren gemäß Anspruch 5, dadurch gekennzeichnet, daß als Lithium-Salze LiClO₄,LiCF₃SO₃, LiN(SO₂CF₃)₂, LiCl, LiPF₆ verwendet werden.

7. Verfahren gemäß Anspruch 1, dadurch gekennzeichnet, daß die Ionenspeicherschicht elektrochemisch mit Li-Ionen beladen wird.

8. Verfahren gemäß Anspruch 1, dadurch gekennzeichnet, daß transparente Substrate verwendet werden.

9. Verfahren gemäß Anspruch 1, dadurch gekennzeichnet, daß als Substrat eine flexible Folie oder Platte eingesetzt wird.

10. Verfahren gemäß Anspruch 1, dadurch gekennzeichnet, daß Kunststoffsubstrate mit Sperrschichten gegen Wasser und Sauerstoff eingesetzt werden.
